# EUROPEAN PATENT APPLICATION

(11) **EP 2 892 039 A1**
(43) Date of publication of application: **08.07.2015**
(21) Application number: 14175070.3
(22) Date of filing: 30.06.2014
(51) Int. Cl.: G08C 23/04

(54) **Display apparatus for setting universal remote controller, method thereof, universal remote controller and setting method thereof**

(30) Priority: 19.12.2013 KR 20130159086
(71) Applicant: Samsung Electronics Co., Ltd, Gyeonggi-do 443-742 (KR)
(72) Inventor: Kim, Kwan-young, Gyeonggi-do (KR); Kim, Min-sup, Gyeonggi-do (KR); Na, Moon-sung, Gyeonggi-do (KR); Yun, Hyun-kyu, Seoul (KR)
(74) Representative: Appleyard Lees

(57) **Abstract**

A display apparatus and a universal remote controller setting method which is executable by using the display apparatus are provided. The display apparatus and includes a signal receiver configured to receive an infrared (IR) signal which is transmitted from a remote controller, a storage configured to store a plurality of control code sets, a controller configured to analyze a feature of the IR signal, and to extract, from among the plurality of control code sets, a control code set which corresponds to the IR signal, and a communicator configured to transmit the extracted control code set to a universal remote controller.

## Description

### CROSS-REFERENCE TO RELATED APPLICATION(S)

This application claims priority from Korean Patent Application No. 10-2013-0159086, filed on December 19, 2013 in the Korean Intellectual Property Office, the disclosure of which is incorporated herein by reference in its entirety.

### BACKGROUND

### 1. Field

Method and apparatus consistent with exemplary embodiments relate to a display apparatus and a method for setting a universal remote controller, and more particularly, to a display apparatus which allows a user to set a control code set of a universal remote controller more conveniently and a method for setting a universal remote controller thereof.

### 2. Description of the Related Art

With the development of electronic technology and communication technology, various kinds of electronic apparatuses have been developed and distributed, and it is customary that each household or each company has a plurality of various electronic apparatuses.

It is common that when a user uses an electronic apparatus, a remote controller is available for use by the user in order to control an electronic apparatus conveniently.

However, as the number of electronic apparatuses used in each household and each company increases, the number of remote controllers also increases. Accordingly, the desirability of a universal remote controller for effectively controlling a plurality of electronic apparatuses increases.

However, to set a universal remote controller, the user needs to register information of an electronic apparatus, and more particularly, the user needs to know a manufacturer of the electronic apparatus and model information. Even if the user can easily know the manufacturer of the electronic apparatus and the model information, the user needs to know a control code set of an apparatus that the user wishes to control in order to set the universal remote controller. However, because there are various manufacturers of a universal remote controller or a display apparatus, and kinds of apparatus models are increased, it is not easy for the user to set a control code set to the universal remote controller.

Therefore, a method for setting the universal remote controller more conveniently is required.

### SUMMARY

One or more exemplary embodiments provide a display apparatus which sets a control code set of a universal remote controller more conveniently and a method for setting a universal remote controller.

According to an aspect of an exemplary embodiment, there is provided a display apparatus including a signal receiver configured to receive an infrared (IR) signal from a remote controller which is configured for controlling at least one from among the display apparatus and an external apparatus, a storage configured to store a plurality of control code sets, a controller configured to analyze a feature of the received IR signal, and to extract, from among the stored plurality of control code sets, a control code set which corresponds to the received IR signal, and a communicator configured to transmit the extracted control code set to a universal remote controller.

The display apparatus may further include a display configured to, when the control code set is extracted, display a first user interface (UI) which is configured for registering the extracted control code set to the universal remote controller, wherein when a registration command which relates to the extracted control code set is received via the first UI, the controller is further configured to control the communicator to transmit the extracted control code set to the universal remote controller.

When a plurality of control code sets which correspond to the IR signal are extracted, the controller may be further configured to control the display to display a second UI which is configured for generating an additional IR signal, and when the additional IR signal is generated, the controller may be further configured to extract a control code set which corresponds to the additional IR signal.

The controller may be further configured to communicate with a server via the communicator, and to update the stored plurality of control code sets.

The extracted control code set may include information which relates to a control signal which is generated variably based on a respective broadcaster from among a plurality of broadcasters when a button from among a plurality of buttons is selected, wherein when the information which relates to the control signal is received, the controller may be further configured to store the received information in the storage.

The controller may be further configured to analyze at least one from among a custom code of the IR signal and a data code of the IR signal, and to analyze the IR signal.

According to an aspect of another exemplary embodiment, there is provided a method for setting a universal remote controller of a display apparatus, the method including receiving an IR signal from a remote controller which is configured for controlling at least one from among the display apparatus and an external apparatus, analyzing a feature of the received IR signal, extracting, from among a plurality of control code sets, a control code set which corresponds to the received IR signal, and transmitting the extracted control code set to a universal remote controller.

The method may further include displaying a first UI which is configured for registering the extracted control code set to the universal remote controller when the extracted control code set is extracted, wherein the transmitting includes transmitting the extracted control code set to the universal remote controller when a registration command which relates to the extracted control code set is received via the first UI.

When a plurality of control code sets which correspond to the received IR signal are extracted, the method may further include displaying a second UI which is configured for receiving an additional IR signal via the second UI.

The method may further include receiving the plurality of control code sets from a server, updating the received plurality of control code sets, and storing the updated plurality of control code sets.

The extracted control code set may include information which relates to a control signal which is generated variably based on a respective broadcaster from among a plurality of broadcasters when a button from among a plurality of buttons is selected, and when the information which relates to the control signal is received from the plurality of broadcasters, the storing may include storing the received information.

The analyzing may include analyzing at least one from among a custom code of the IR signal and a data code of the IR signal and analyzing the IR signal.

According to an aspect of another exemplary embodiment, there is provided a universal remote controller including a signal receiver configured to receive an IR signal from an external remote controller which is configured for controlling at least one from among a display apparatus and an external apparatus, a storage configured to store a plurality of control code sets, an input configured to include at least one key, a controller configured to analyze a feature of the received IR signal, to select, from among the stored plurality of control code sets, at least one control code set which corresponds to the received IR signal, and when one key is selected at the input, to extract a control code which corresponds to the selected key from among the selected at least one control code set, and a remote controller signal output configured to output a remote controller signal which includes the extracted control code.

According to an aspect of another exemplary embodiment, there is provided a method for setting a universal remote controller, the method including receiving an IR signal from an external remote controller which is configured for controlling at least one from among a display apparatus and an external apparatus, analyzing a feature of the received IR signal, selecting, from among a plurality of control code sets, at least one control code set which corresponds to the received IR signal, extracting, from the selected at least one control code set, a control code which corresponds to a selected key when one key included in the universal remote controller is selected, and outputting a remote controller signal which includes the extracted control code.

### BRIEF DESCRIPTION OF THE DRAWINGS

The above and/or other aspects will be more apparent by describing certain exemplary embodiments with reference to the accompanying drawings, in which:
FIG. 1 is a diagram which illustrates a method for setting a universal remote controller, according to an exemplary embodiment;
FIG. 2 is a block diagram which illustrates a configuration of a display apparatus, according to an exemplary embodiment;
FIG. 3 is a block diagram which illustrates a configuration of a display apparatus in detail, according to an exemplary embodiment;
FIG. 4 is a diagram which illustrates an IR signal of a remote controller;
FIGS. 5 and 6 are flowcharts which illustrate a method for setting a universal remote controller of a display apparatus;
FIG. 7 is a diagram which illustrates a method for setting a universal remote controller, according to an exemplary embodiment;
FIG. 8 is a block diagram which illustrates a configuration of a universal remote controller, according to an exemplary embodiment; and
FIG. 9 is a flowchart which illustrates a method for setting a universal remote controller, according to an exemplary embodiment.

### DETAILED DESCRIPTION OF EXEMPLARY EMBODIMENTS

Hereinafter, exemplary embodiments will be described in greater detail with reference to the accompanying drawings. In explaining the exemplary embodiments, if it seems that a detailed explanation regarding a related art or a configuration obscures a substance of one or more of the exemplary embodiments with an unnecessary detail, the detailed explanation is omitted. Terms used below are justified in accordance with a function of one or more exemplary embodiments, and these may vary according to an intention of a user and an operator, and customs. Therefore, the justification should be made through the overall specification of the exemplary embodiments.

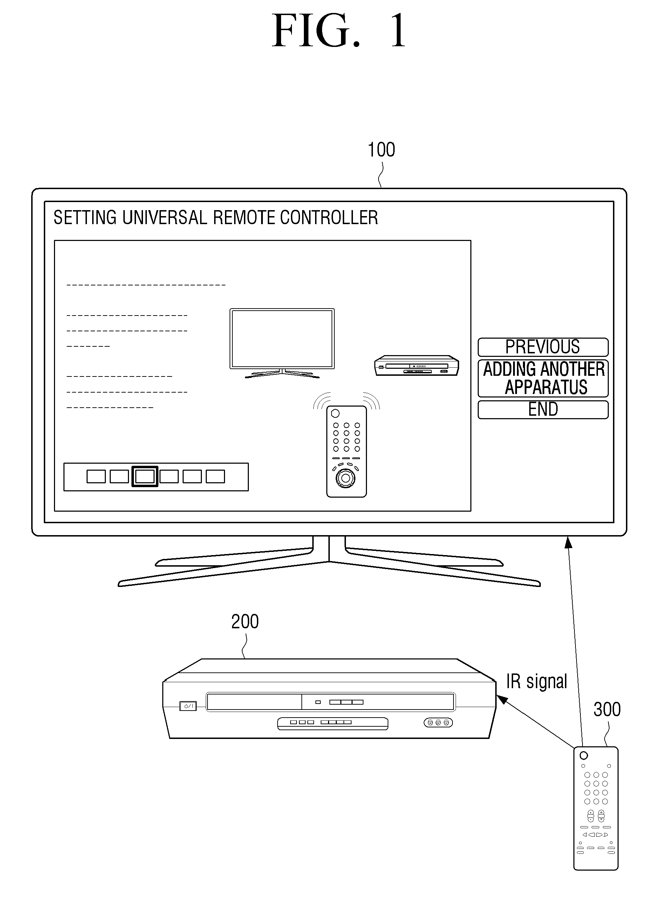

FIG. 1 is a diagram which illustrates a method for setting a universal remote controller of a display apparatus 100, according to an exemplary embodiment.

In an aspect, a set-top box 200 and a remote controller 300 may be provided by a broadcaster who provides broadcasting contents which are received via a display apparatus 100. In particular, if the broadcaster changes, the set-top box 200 and the remote controller 300 may change. The remote controller 300 may transmit an IR signal for controlling the set-top box 200. The set-top box 200 may receive one or more IR signals which respectively correspond to each of a channel change key, a number key, volume control key, and various other keys from a remote controller 300. The set-top box 200 may perform an operation which corresponds to the received IR signal.

For setting a universal remote controller, the display apparatus 100 also may receive the IR signal which is transmitted by the remote controller 300. When the remote controller 300 is configured for controlling a Digital Video Disc (DVD) player or a home theater, and not for a set-top box, the display apparatus 100 may receive the IR signal which is transmitted by the remote controller and may set the universal remote controller by using the received IR signal. A detailed method for setting a universal remote controller is described below.

As illustrated in FIG. 1, the display apparatus 100 may display any one or more of various User Interfaces (Uls) which are usable for setting the universal remote controller.

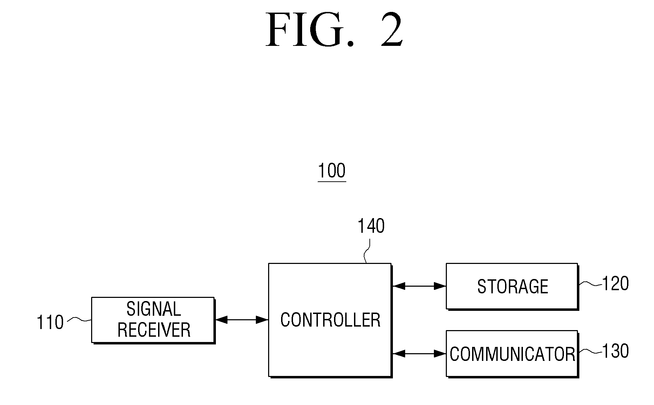

FIG. 2 is a block diagram which illustrates a configuration of the display apparatus 100 simply, according to an exemplary embodiment. As illustrated in FIG. 2, the display apparatus 100 includes a signal receiver 110, a storage 120, a communicator 130, and a controller 140. The display apparatus 100 may be a television, but it may be any one or more of various kinds of electronic apparatuses with a display, such as a tablet personal computer (PC), a camcorder, a notebook PC, a Personal Digital Assistant (PDA), a television, and/or any other suitable type of device.

The signal receiver 110 is a component which is configured for receiving an IR signal from the remote controller 300 in order to control the display apparatus 100 and/or an external apparatus.

The remote controller 300 for controlling the display apparatus 100 or the remote controller 300 for controlling the external apparatus, such as the set-top box, transmits the IR signal. The remote controller 300 transmits an intrinsic IR signal which varies according to each key. Accordingly, a controlled object of the remote controller 300 may perform an operation according to the received IR signal.

The storage 120 is a component which is configured for storing a plurality of control code sets. The display apparatus 100 is configured to transmit different control code sets according to a manufacturer and/or a model of various electronic apparatuses which are controllable by the remote controller 300. Because various control code sets exist according to a manufacturer and/or a model of various electronic apparatuses, the storage 120 may store the plurality of control code sets.

The storage 120 may store any one or more of various software modules, data and/or other suitable objects for driving the display apparatus 100. For example, the storage 120 may store software which includes a base module, a sensing module, a communication module, a presentation module, a web browser module, and a service module.

The communicator 130 is configured for performing communication with any one or more of various types of external apparatuses according to various types of communication methods. In this aspect, the communicator 130 may perform a communication with the universal remote controller. In particular, the communicator 130 may transmit the control code set to the universal remote controller.

The communicator 130 may include any one or more of various kinds of communication chips, such as a Wi-Fi chip, a Bluetooth chip, a Near Field Communication (NFC) chip, a wireless communication chip, and/or any other suitable type of chip. The Wi-Fi chip, the Bluetooth chip, and the NFC chip may execute communications according to a Wi-Fi communication method, a Bluetooth communication method, and an NFC communication method, respectively. The NFC chip refers to a chip which implements the NFC method which uses the 13.56 MHz frequency band from among various RFID frequency bands, such as 135 kHz, 13.56 MHz, 433 MHz, 860-960 MHz, 2.45 GHz and other RFID frequency bands. In a case of using the Wi-Fi chip and/or the Bluetooth chip, the communicator may transmit and receive any one or more of various kinds of connecting information, such as service set identifier (SSID) and/or a session key, and after implementing a communication connection by using these, the communicator may transmit and receive any one or more of various kinds of information. The wireless communication chip refers to a chip which executes a communication according to any one or more of various communication standards, such as IEEE, Zigbee, 3rd Generation (3G), 3rd Generation Partnership Project (3GPP), Long Term Evolution (LTE) and any other suitable communication standard.

Accordingly, the communicator 130 may transmit the control code set to the universal remote controller by using a local area network.

The controller 140 controls overall operations of the display apparatus 100. In particular, the controller 140 may analyze a feature of an IR signal which is received via the signal receiver 110, and extract, from among the stored plurality of control code sets, a control code set which corresponds to the received IR signal.

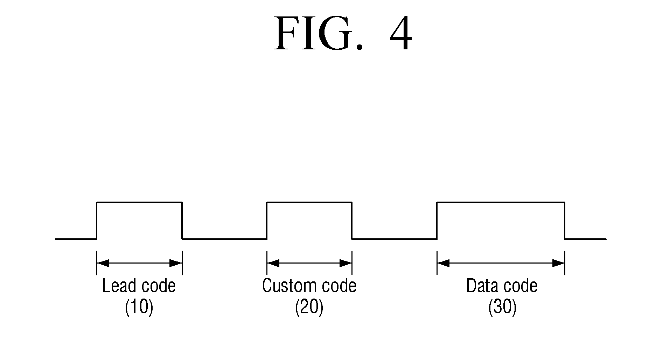

In this aspect, a configuration of the IR signal is illustrated in FIG. 4. The IR signal may include a lead code 10, a custom code 20, and a data code 30. FIG. 4 illustrates an exemplary order of the lead code 10, the custom code 20, and the data code 30, but the order may vary.

The custom code 20 may include information which relates to a manufacturer of an electronic apparatus which is controllable by the remote controller 300. The data code 30 may include information which relates to a respective function of each key. For example, the data code 30 may include information which relates to the function of each key, such as a key which corresponds to the number 1 or a key which corresponds to a function of turning up the volume.

Because the custom code 20 and the data code 30 vary according to a manufacturer and/or a broadcaster and/or other criteria, the controller 140 may analyze at least one of the custom code 20 and/or the data code 30, and analyze the received IR signal.

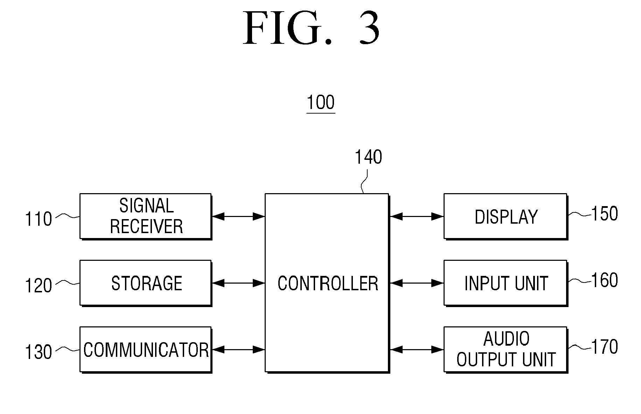

As illustrated in FIG. 3, the display apparatus 100 may include the signal receiver 110, the storage 120, the communicator 130, the controller 140, a display 150, an input unit 160 and an audio output unit 170. FIG. 3 illustrates various kinds of components comprehensively, with examples of the display apparatus 100 which is equipped with various functions, such as a universal remote controller setting function, a communication function, a video playback function, a display function, and any other suitable function. Therefore, according to an exemplary embodiment, one or more components which are illustrated in FIG. 3 may be deleted or changed, and another component may be added.

Among the components which are illustrated in FIG. 3, the components which are the same as the components illustrated in FIG. 2 will not be described.

The display 150 is a component which is configured to display an image. The display 150 may display contents received via a broadcasting channel. In this aspect, the display apparatus 100 may receive any one or more of various kinds of broadcasting signals that a broadcasting company transmits via a Radio Frequency (RF) network, and also may receive contents from any one or more of various kinds of servers via an Internet Protocol (IP) network, and the display 150 may display the received contents.

The display 150 may display any one or more of various Uls which are configured for setting the universal remote controller. For example, when a control code set is extracted by the controller 140, a UI which is configured for registering the extracted control code set to the universal remote controller may be displayed. The UI configured for registering the control code set may include a content which requests the user to confirm whether the control code set that the controller 140 extracted and the information which relates to the extracted control code set is suitable for the electronic apparatus which is controllable by the remote controller 300.

The input unit 160 is a component which is configured to receive an input of a user's command in order to control the display apparatus 100. The input unit 160 may receive the user's command which is inputted via a button equipped in a main body of the display apparatus 100 and/or via a button equipped in a remote controller, and may transmit the user's command to the controller 140.

The audio output unit 170 may output audio data. An audio processor (not illustrated) of the display apparatus 100 performs an audio data process, and any one or more of various processes, such as decoding, amplification and noise filtering of the audio data, may be performed. Therefore, the audio output unit 170 may output the audio data which is processed by the audio processor (not illustrated).

When the UI which is configured for registering the extracted control code set is displayed in the display 150 and the user's command to confirm the extracted control code set is received via the input unit 160, the controller 140 may control the communicator 130 to transmit the extracted control code set to the universal remote controller.

When the controller 140 extracts one control code set from among a plurality of control code sets, after confirming whether the control code set which is extracted via the UI which is configured for registering the extracted control code set is suitable, the controller 140 controls the communicator 130 to transmit the extracted control code set to the universal remote controller.

When the controller 140 does not extract one control code set because the IR signal which is received via the signal receiver 110 is insufficient for performing such an extraction, the controller 140 may control the display 150 to display a UI which is configured for generating an additional IR signal.

The UI which is configured for generating the additional IR signal may include contents for displaying the plurality of extracted control code sets and for facilitating a selection of one control code set by the user via the input unit 160.

The UI which is configured for generating the additional IR signal may include contents with an instruction to display the plurality of control code sets and an instruction for the user to select a random key of the remote controller 300.

Accordingly, the display 150 may display the UI which is configured to generate an additional IR signal, including contents with an instruction to select the random key of the remote controller 300. When the user's command to select a random key is received via the input unit 160, the controller 140 may continue to perform an extraction of the control code set based on the additional IR signal. The controller 140 may analyze the additional control code set until one control code set is successfully extracted. When one control code set is searched, the controller 140 may control the display 150 to display the UI which is configured for registering the extracted control code set.

The controller 140 may communicate with an external server via the communicator 130. Accordingly, the controller 140 may receive the plurality of control code sets from the server, and may update the plurality of control code sets which are stored in the storage 120. The controller 140 may periodically receive the plurality of control code sets from the server at every predetermined period. The controller 140 may control to receive or update the plurality of control code sets automatically, even if a separate user's command is not received.

The control code set may include information which relates to a control signal which is generated variably based on a respective broadcaster from among a plurality of broadcasters when a button from among a plurality of buttons is selected. The controller 140 may control the received information to be stored in the storage 120 when information which relates to the control signal is received from the plurality of broadcasters. The control code set may vary according to the plurality of broadcasters, and may be received from each respective broadcaster via the communicator 130. The control code set may include a digitized wave pattern of the IR signal which occurs when each button of the remote controller is operated.

As described above, by using the display apparatus, the user may set the universal remote controller automatically without performing a separate setting for the universal remote controller.

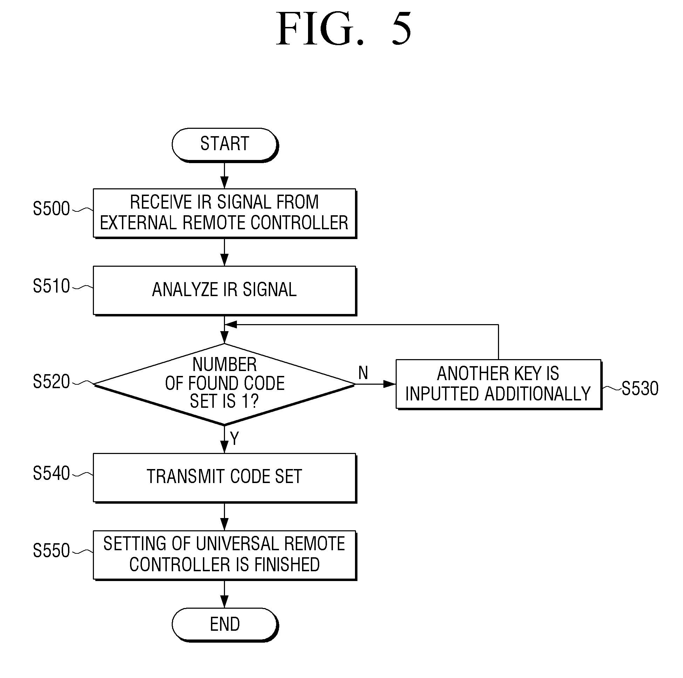

Referring to FIG. 5, a method for setting the universal remote controller by analyzing the IR signal is described below.

First, in operation S500, the display apparatus 100 receives the IR signal from the external remote controller. In operation S510, the display apparatus 100 analyzes the received IR signal.

In this aspect, the IR signal may include the lead code 10, the custom code 20, and the data code 30. FIG. 4 illustrates an exemplary order of the lead code 10, the custom code 20, and the data code 30, but the order may vary.

The custom code 20 may include information which relates to a manufacturer of an electronic apparatus which is controllable by the remote controller 300. The data code 30 may include information which relates to a respective function of each key. For example, the data code 30 may include information which relates to the function of each key, such as a key which corresponds to the number 1 or a key which corresponds to a function of turning up the volume.

Because the custom code 20 and the data code 30 vary according to a manufacturer and/or a broadcaster and/or other suitable criteria, the controller 140 may analyze at least one of the custom code 20 and the data code 30, and analyze the IR signal. However, the method of analyzing one of the custom code 20 and the data code 30 and analyzing the IR signal is merely exemplary, and the controller 140 may analyze the IR signal by any method which is suitable for facilitating an extraction of the control code set.

In operation S520, the display apparatus 100 determines whether a number of searched code sets (i.e., a number of code sets which correspond to the received IR signal) is equal to one. When the display apparatus 100 determines that the number of corresponding code sets is equal to one (i.e., operation S520-Y), then in operation S540, the display apparatus transmits the code set. The display apparatus 100 transmits the extracted code set to the universal remote controller, and then completes the setting of the universal remote controller in operation S550.

However, performing an operation of transmitting the code set after making a determination that the number of corresponding code sets is equal to one by the display apparatus 100 is merely exemplary, and in an alternative, when the plurality of code sets are extracted, a user's command to select one code set may be inputted by a user to the display apparatus 100 via the UI.

When it is determined that the number of corresponding code sets is not equal to one (i.e., operation S520-N), then in operation S530, the display apparatus 100 receives an additional input which relates to another key. The display apparatus 100 may display the UI which is configured for generating an additional IR signal.

The UI which is configured for generating the additional IR signal may include contents with an instruction to display the plurality of control code sets and an instruction for the user to select a random key of the remote controller.

Accordingly, when the display apparatus 100 displays the UI which is configured for generating an additional IR signal including contents with the instruction to select a random key of the remote controller, and the user's command which relates to a selection of one random key is received, the display apparatus 100 may continue to extract the control code set based on the additional IR signal. The display apparatus 100 may analyze the additional IR signal until a single corresponding control code set is extracted.

By the method for setting the universal remote controller as described above, the user may set the universal remote controller by extracting one code set automatically without a separate setting for the universal remote controller.

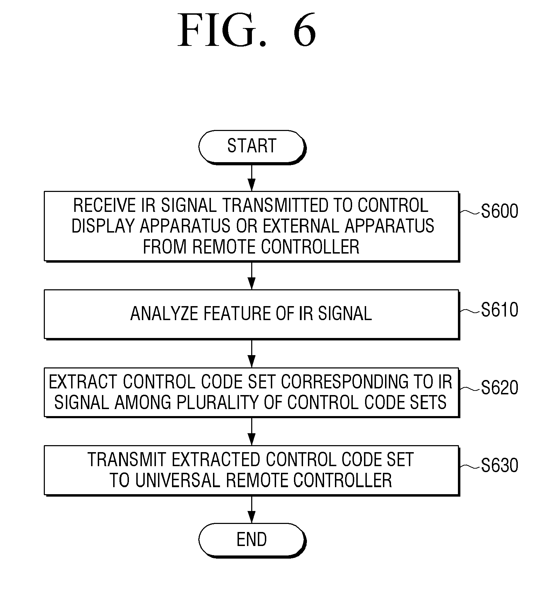

FIG. 6 is a flowchart which illustrates a method for setting a universal remote controller, according to another exemplary embodiment.

First, in operation S600, the display apparatus 100 receives an IR signal which is transmitted by the remote controller in order to control the display apparatus or the external apparatus. In operation S610, the display apparatus 100 analyzes a feature of the received IR signal.

The IR signal may include the lead code 10, the custom code 20, and the data code 30.

The custom code 20 may include information which relates to a manufacturer of an electronic apparatus which is controllable by the remote controller 300. The data code 30 may include information which relates to a respective function of each key. For example, the data code 30 may include information which relates to the function of each key, such as a key which corresponds to the number 1 or a key which corresponds to a function of increasing the volume.

Because the custom code 20 and the data code 30 vary according to a manufacturer or a broadcaster and/or other suitable criteria, the display apparatus 100 may analyze at least one of the custom code 20 or the data code 30, and analyze the IR signal.

After finishing the analysis of the IR signal, in operation S620, the display apparatus 100 extracts, from among a plurality of control code sets, the control code set which corresponds to the received IR signal. Then, in operation S630, the display apparatus 100 transmits the extracted control code set to the universal remote controller.

The display apparatus 100 may store the plurality of control code sets. The display apparatus 100 may receive the plurality of control code sets from the external server and update the stored plurality of control code sets.

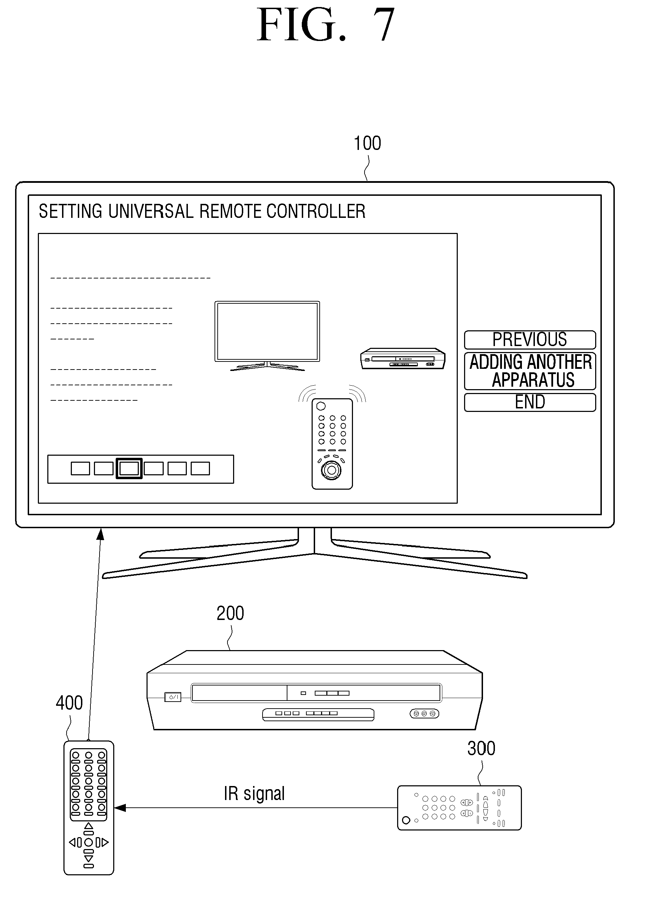

According to another exemplary embodiment, as illustrated in FIG. 7, the universal remote controller 400 may receive an IR signal from the external remote controller 300, extract the control code set, and control the electronic apparatuses which are controllable by the external remote controller 300.

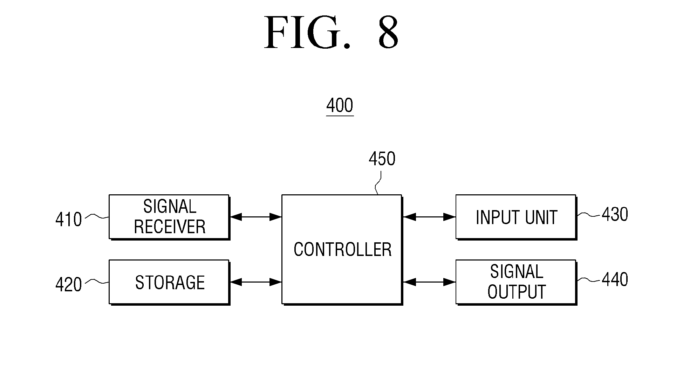

A component of the universal remote controller 400 which receives an IR signal from the external remote controller 300 is described below with reference to FIG. 8.

The universal remote controller 400 includes a signal receiver 410, a storage 420, an input unit 430, a signal output unit 440, and a controller 450.

The signal receiver 410 is a component which is configured for receiving an IR signal which is transmitted by the external remote controller 300 in order to control the display apparatus 100 or the external apparatus.

The external remote controller 300 which is configured for controlling the display apparatus 100 or the external remote controller 300 which is configured for controlling the external apparatus, such as the set-top box 200, transmits the IR signal. The external remote controller 300 transmits an intrinsic IR signal which varies according to each respective key. Accordingly, a control object of the external remote controller 300 may perform an operation based on the received IR signal.

The storage 420 is a component which is configured for storing a plurality of control code sets.

The storage 420 may store the plurality of control code sets according to a manufacturer or a model of various electronic apparatuses which are controllable by the remote controller 300. Because various control code sets exist according to a manufacturer, a model, and/or a broadcaster of various electronic apparatuses, the storage 420 may store the plurality of control code sets.

The input unit 430 is a component which is configured for receiving an input of a user's command in order to control the control object of the external remote controller and which includes at least one key. The input unit 430 may include at least one number key, such as 0, 1, 2, ..., 9, and/or a volume control key, and/or one or more keys which implement any other suitable function. The input unit 430 may receive a user's command to touch a plurality of keys and/or any other inputtable user command.

The signal output unit 440 is a component which is configured for outputting a remote controller signal in order to control the electronic apparatus.

The controller 450 analyzes a feature of the IR signal which is received from the external remote controller 300, and selects a control code set which corresponds to the received IR signal from among the plurality of control code sets which are stored in the storage 420. The controller 450, when one key is selected via the input unit 430, extracts a control code set which corresponds to the selected key. Accordingly, the signal output unit 440 outputs a remote controller signal which is included in the control code set extracted by the controller 450. The universal remote controller 400 may control the electronic apparatus by using the remote controller signal that the signal output unit 440 outputs.

The universal remote controller 400, when one control code set which corresponds to the received IR signal is extracted, may extract a control code which corresponds to a random key when a random key of the input unit 430 is selected, and a remote controller signal which includes the extracted control code may be outputted.

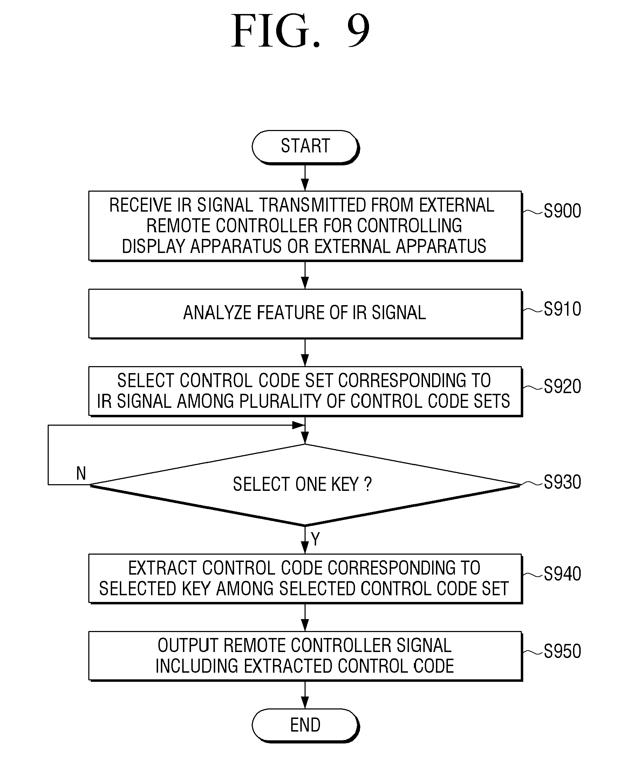

FIG. 9 is a flowchart which illustrates a method for setting a universal remote controller, according to an exemplary embodiment.

First, in operation S900, the universal remote controller 400 receives an IR signal from the external remote controller for controlling the display apparatus or the external apparatus. In operation S910, the universal remote controller 400 analyzes a feature of the received IR signal.

The IR signal may include a lead code 10, a custom code 20, and a data code 30.

The custom code 20 may include information which relates to a manufacturer of an electronic apparatus which is controllable by the remote controller 300. The data code 30 may include information which relates to a respective function of each key. For example, the data code 30 may include information which relates to the function of each key, such as a key which corresponds to the number 1 or a key which corresponds to a function of increasing the volume.

Because the custom code 20 and the data code 30 vary according to a manufacturer or a broadcaster and/or other suitable criteria, the universal remote controller 400 may analyze one of the custom code 20 or the data code 30, and analyze the IR signal.

In operation S920, the universal remote controller 400 selects a control code set which corresponds to the received IR signal from among a plurality of control code sets.

When the universal remote controller 400 makes a determination whether one key is selected in operation S930, and a random key is selected (i.e., operation S930-Y), a control code which corresponds to the selected key from among the selected control code set is extracted in operation S940. Then, in operation S950, the universal remote controller 400 outputs a remote controller signal which includes the extracted control code.

The universal remote controller 400, when one control code set which corresponds to the received IR signal is extracted, may extract a control code which corresponds to a random key from among control code sets when a random key of the input unit 430 is selected, and a remote controller signal which includes the extracted control code may be outputted.

The method for setting the universal remote controller according to the exemplary embodiments described above may be coded as software and be stored in a non-transitory readable medium. The non-transitory readable medium may be used by loading in any one or more of various apparatuses.

The non-transitory readable medium refers to a medium which stores a data semi-permanently and is readable by an apparatus, such as a register, a cache, a memory, and any other suitable non-transitory medium, as opposed to a transitory medium. In particular, any one or more of a CD, a DVD, a hard disk, a blu-ray disk, a USB, a memory card, and ROM may be the non-transitory readable medium.

According to various aspects of one or more exemplary embodiments, the user may set a universal remote controller conveniently via a display apparatus.

Exemplary embodiments are illustrated and described above, but the present inventive concept is not limited to the described exemplary embodiments. Also, the description of the exemplary embodiments is intended to be illustrative and not to limit the scope of the claims, and it will be appreciated by those skilled in the art that changes may be made to the exemplary embodiments without departing from the principles and spirit of the present inventive concept, the scope of which is defined in the appended claims.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A display apparatus, comprising:
a signal receiver configured to receive an IR signal transmitted from a remote controller for controlling the display apparatus or an external apparatus;
a storage configured to store a plurality of control code sets;
a controller configured to analyze a feature of the IR signal, and extract a control code set corresponding to the IR signal from among the plurality of control code sets; and
a communicator configured to transmit the extracted control code set to a universal remote controller.

2. The display apparatus as claimed in claim 1, further comprising:
a display configured to, when the control code set is extracted, display a UI for registering the extracted control code set to the universal remote controller,
wherein the controller, when a registration command regarding the control code set is received via the UI, controls the communicator to transmit the extracted control code set to the universal remote controller.

3. The display apparatus as claimed in claim 2, wherein the controller, when a plurality of control code sets corresponding to the IR signal are extracted, controls the display to display a UI for generating an additional IR signal, and
when the additional IR signal is generated, the controller extracts a control code set corresponding to the additional IR signal.

4. The display apparatus as claimed in one of claim 1 to claim 3, wherein the controller communicates with a server through the communicator, and updates the stored plurality of control code sets.

5. The display apparatus as claimed in one of claim 1 to claim 4, wherein the extracted control code set comprises information regarding a control signal which is generated variably based on a plurality of broadcasters when a button from among a plurality of buttons is selected,
wherein the controller, when information regarding the control signal is received, stores the received information in the storage.

6. The display apparatus as claimed in one of claim 1 to claim 5, wherein the controller analyzes one of a custom code and a data code of the IR signal, and analyzes the IR signal.

7. A method of setting a universal remote controller of a display apparatus, the method comprising:
receiving a IR signal transmitted from a remote controller for controlling the display apparatus or an external apparatus;
analyzing a feature of the IR signal;
extracting a control code set corresponding to the IR signal from among a plurality of control code sets; and
transmitting the extracted control code set to a universal remote controller.

8. The method as claimed in claim 7 further comprising:
displaying a first UI for registering the extracted control code set to the universal remote controller when the control code set is extracted,
wherein the transmitting comprises, when a registration command regarding the control code set is received via the first UI, transmitting the extracted control code set to the universal remote controller.

9. The method as claimed in claim 8, wherein the displaying comprises, when a plurality of control code sets corresponding to the IR signal are extracted, displaying a second UI for receiving another IR signal via the second UI.

10. The method as claimed in one of claim 7 to claim 9, further comprising receiving a plurality of control code sets from a server, updating the received plurality of control code sets, and storing the updated plurality of control code sets.

11. The method as claimed in claim 10, wherein the extracted control code set comprises
information regarding a control signal which is generated variably according to a plurality of broadcasters when a button from among a plurality of buttons is selected, and
wherein the storing comprises, when the information regarding the control signal is received from the plurality of broadcasters, storing the received information.

12. The method as claimed in one of claim 7 claim 11, wherein the analyzing comprises analyzing one of a custom code or a data code of the IR signal and analyzing the IR signal.
